# EUROPEAN PATENT APPLICATION

(11) **EP 3 421 626 A1**
(43) Date of publication of application: **02.01.2019**
(21) Application number: 17756332.7
(22) Date of filing: 15.02.2017
(51) Int. Cl.: C22B 23/00, B22F 9/26, C22B 1/16, C22B 3/38, C22B 5/12

(54) **METHOD FOR PRODUCING NICKEL POWDER**

(30) Priority: 22.02.2016 JP 2016030801
(71) Applicant: Sumitomo Metal Mining Co., Ltd., Tokyo 105-8716 (JP)
(72) Inventor: HEGURI Shin-ichi, Niihama-shi Ehime 792-0002 (JP); OZAKI Yoshitomo, Niihama-shi Ehime 792-0002 (JP)
(74) Representative: Barker Brettell LLP
(86) International application number: PCT/JP2017/005528
(87) International publication number: WO 2017/145892

(57) **Abstract**

Provided is a method for producing coarse particles of high purity nickel powder from a nickel ammine sulfate complex solution using industrially-inexpensive hydrogen gas and fine nickel powder. The method for producing nickel powder, including performing the following processes (1) to (5), wherein a sulfuric acid solution containing nickel and cobalt is subjected to (1) a pH adjusting step, (2) a solvent extraction step, (3) a complexing step for obtaining a nickel ammine sulfate complex solution, (4) a reduction step for obtaining a reduced slurry containing nickel powder, and (5) a solid-liquid separation step of performing solid-liquid separation to obtain nickel powder and a solution after reduction, and solution after reduction repeatedly using the solution after reduction in either or both of (2) the solvent extraction step and (3) the complexing step. (132 words)

## Description

### Technical Field

The present invention relates to a method for obtaining high purity nickel powder from a nickel ammine sulfate complex solution and briquettes prepared by pressing the nickel powder.

Particularly, the present invention can be applied to the treatment of an in-process intermediate solution generated from a nickel hydrometallurgical process.

### Background Art

Methods for industrially producing nickel powder using a hydrometallurgical process are known including a method for producing nickel powder by dissolving a raw material in a sulfuric acid solution followed by removing impurities to obtain a nickel sulfate solution, adding ammonia to the resulting nickel sulfate solution to form an ammine complex of nickel, and feeding hydrogen gas into the produced nickel ammine sulfate complex solution to reduce nickel.

For example, Non Patent Literature 1 describes a process for producing nickel powder by adding an iron compound as seed crystals during a reduction reaction to precipitate nickel onto the iron compound, but the problem is that iron derived from the seed crystals is mixed in the final product in this process.

Furthermore, methods for obtaining nickel powder using a reducing agent other than hydrogen gas also have been proposed.

For example, Patent Literature 1 discloses nickel powder which is inexpensive, is excellent weatherability, has low electric resistance in the state where the nickel powder is mixed with a resin, reduces the initial electric resistance and the electric resistance during use, can be stably used for a long time, and is suitable for conductive particles for a conductive paste and a conductive resin, and a method for producing the nickel powder.

The nickel powder disclosed in Patent Literature 1 contains 1 to 20% by mass of cobalt and the balance consisting of nickel and inevitable impurities, includes secondary particles in which primary particles aggregate, and contains 0.8% by mass or less of oxygen. According to the description, preferably, cobalt is contained only in the surface layer portions of the secondary particles and the cobalt content in the surface layer portion is 1 to 40% by mass.

However, in the case of attempts to obtain nickel powder according to the disclosed production method, cobalt coexists and therefore, this method is not suitable for an application: in which nickel and cobalt coexist, for example, in a nickel oxide ore; these metals are separated; and each metal is intended to be economically recovered as high purity metal.

Furthermore, Patent Literature 2 provides a method for producing metal powder by a liquid phase reduction method that is improved so that a particle aggregate may be hardly produced.

The method for producing metal powder includes a first step of dissolving a metal compound, a reducing agent, a complexing agent, and a dispersant to prepare an aqueous solution containing metal ions derived from the metal compound and a second step of adjusting the pH of the aqueous solution to reduce the metal ions with the reducing agent to precipitate the metal powder.

However, this production method requires high cost since an expensive chemical is used, and is not economically advantageous for applying the method to a process operated on a large scale as the above nickel smelting.

Although such a variety of processes for producing nickel powder have been proposed as described above, any method for producing high purity nickel powder using an industrially inexpensive hydrogen gas has not been proposed.

### Citation List

### Patent Literature

Patent Literature 1:
   Japanese Patent Application Laid-Open No. 2005-240164
Patent Literature 2:
   Japanese Patent Application Laid-Open No. 2010-242143

### Non Patent Literature

Non Patent Literature 1:
POWDER METALLURGY, 1958, No. 1/2, P. 40-52

### Summary of Invention

### Technical Problem

In such circumstances, an object of the present invention is to provide a method for producing coarse particles of high purity nickel powder from a nickel ammine sulfate complex solution using industrially inexpensive hydrogen gas and fine nickel powder.

### Solution to Problem

A first aspect of the present invention to solve the problems is a method for producing nickel powder, including performing the following processes (1) to (5) on a sulfuric acid solution containing nickel and cobalt:
(1) a pH adjusting step of adding an alkali hydroxide to the sulfuric acid solution containing nickel and cobalt to obtain a pH-adjusted solution;
(2) a solvent extraction step of bringing the pH-adjusted solution obtained in the pH adjusting step into contact with an extractant to separate into a raffinate and an organic phase after extraction, and then bringing the organic phase after extraction into contact with a solution after reduction to separate into an aqueous phase after exchange containing nickel and an organic phase after exchange;
(3) a complexing step of adding ammonium sulfate or a solution after reduction obtained in a subsequent solid-liquid separation step and ammonium sulfate to the aqueous phase after exchange obtained in the solvent extraction step to obtain a nickel ammine sulfate complex solution;
(4) a reduction step of blowing hydrogen gas into a mixture slurry prepared by adding seed crystals to the nickel ammine sulfate complex solution obtained in the complexing step, to form a nickel powder by precipitation of nickel on the surface of the seed crystals to obtain a reduced slurry containing the nickel powder; and
(5) the solid-liquid separation step of subjecting the reduced slurry obtained in the reduction step to solid-liquid separation to obtain a nickel powder and a solution after reduction, and recycling the resulting solution after reduction in either or both of the solvent extraction step and the complexing step.

A method for producing nickel powder, including performing the following treatments (1) to (5) on a sulfuric acid solution containing nickel and cobalt.

A second aspect of the present invention is a method for producing nickel powder, wherein in the solvent extraction step according to the first aspect, the resulting organic phase after exchange is brought into contact with water to separate into a cobalt-recovering solution and an organic phase after stripping, and then the organic phase after stripping is recycled as the extractant.

A third aspect of the present invention is a method for producing nickel powder, wherein in the solid-liquid separation step according to the first aspect, repeated operation of sieving the resulting nickel powder by particle size, and adding a nickel powder having a particle size smaller than a predetermined particle size as seed crystals to either or both of the complexing step and the reduction step provides a coarse nickel powder.

A fourth aspect of the present invention is a method for producing nickel powder, wherein the nickel powder being sieved to have the particle size smaller than the predetermined particle size according to the third aspect has an average particle size of 0.1 to 100 µm.

A fifth aspect of the present invention is a method for producing nickel powder, wherein, in the reduction step according to the first aspect, a dispersant containing one or more selected from polyacrylic acid, acrylate salts, and sulfonate salts is further added during the preparation of the mixture slurry.

A sixth aspect of the present invention is a method for producing nickel powder, wherein, in the reduction step according to the first aspect, the amount of the seed crystals added is 1 to 100% based on the weight of nickel in the nickel ammine sulfate complex solution.

A seventh aspect of the present invention is a method for producing nickel powder, wherein the sulfuric acid solution containing nickel and cobalt according to the first aspect is at least one of nickel and cobalt mixed sulfide, crude nickel sulfate, nickel oxide, nickel hydroxide, nickel carbonate, and metal nickel powder.

An eighth aspect of the present invention is a method for producing nickel powder, wherein the extractant according to the first aspect is 2-ethylhexylphosphonic acid mono-2-ethylhexyl ester or di-(2,4,4-trimethylpentyl)phosphinic acid.

A ninth aspect of the present invention is a method for producing nickel powder, wherein the concentration of the ammonium sulfate in the nickel ammine sulfate complex solution according to the first aspect is in the range of 100 to 500 g/L, and a molar ratio of the ammonium concentration to the concentration of nickel in the complex solution is 1.9 or higher.

A tenth aspect of the present invention is a method for producing nickel powder, wherein the reduction step according to the first aspect is performed while maintaining a temperature in the range of 150 to 200°C and a pressure in the range of 1.0 to 4.0 MPa.

A eleventh aspect of the present invention is a method for producing nickel powder, including a nickel powder briquetting step of processing the nickel powder obtained through the reduction step and the solid-liquid separation step according to the first aspect into nickel briquettes in a block form using a briquetting machine; and a briquette sintering step of subjecting the resulting nickel briquettes in the block form to sintering treatment under holding conditions at a temperature of 500 to 1200°C in a hydrogen atmosphere to form nickel briquettes as a sintered compact.

A twelfth aspect of the present invention is to provide a method for producing nickel powder, including an ammonium sulfate recovery step of concentrating the solution after reduction obtained in the solid-liquid separation step according to the first aspect to crystallize ammonium sulfate into ammonium sulfate crystals and recovering the ammonium sulfate crystals.

A thirteenth aspect of the present invention is to provide a method for producing nickel powder, including an ammonia recovery step of adding an alkali to the solution after reduction obtained in the solid-liquid separation step according to the first aspect, heating the resulting mixture to volatilize ammonia gas and recovering the ammonia gas.

### Advantageous Effect of Invention

According to the present invention, in the method for producing nickel powder using hydrogen gas from a nickel ammine sulfate complex solution, high purity nickel powder can be easily obtained by using seed crystals which do not contaminate the products.

### Brief Description of Drawing

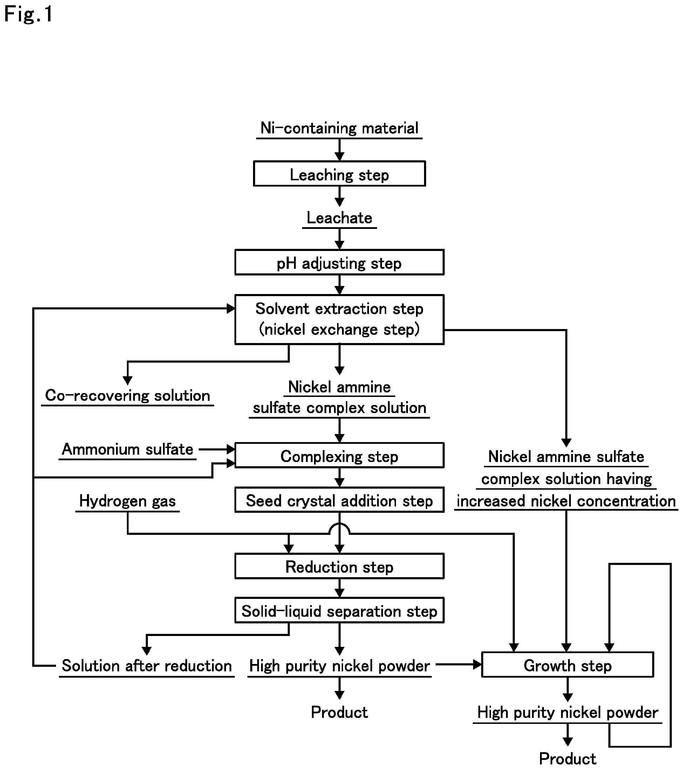

[Figure 1] Figure 1 is a production flow chart for nickel powder according to the present invention.

### Description of Embodiments

The present invention is a method for producing a nickel powder from a nickel ammine sulfate complex solution and is characterized in that high purity nickel powder containing a smaller amount of impurities is produced from the nickel ammine sulfate complex solution by subjecting a process solution, which is an intermediate product of a hydrometallurgical process, to the steps (1) to (5) as shown below.

Hereinafter, the method for producing a high purity nickel powder according to the present invention will be described with reference to the production flow chart for the high purity nickel powder according to the present invention illustrated in Figure 1.

### [Leaching step] and "(1) pH adjusting step"

First, the "leaching step" is a step of dissolving a nickel-containing material, serving as a starting material, such as an industrial intermediate including one or a mixture of two or more selected from nickel and cobalt mixed sulfide, crude nickel sulfate, nickel oxide, nickel hydroxide, nickel carbonate, nickel powder, and the like with sulfuric acid to leach nickel to produce a leachate (solution containing nickel), and is performed by a known method, for example, disclosed in Japanese Patent Application Laid-Open No. 2005-350766.

Next, the pH of the leachate is adjusted using alkali hydroxide in "(1) pH adjusting step", and the leachate is fed to "(2) solvent extraction step".

### [(2) Solvent extraction step]

In this "(2) solvent extraction step", the leachate, which is obtained in the leaching step and then subjected to pH adjustment, is brought into contact with an organic phase. Thereby, components such as nickel and cobalt are distributed in the organic phase to extract nickel and cobalt. This organic phase is then brought into contact with an aqueous phase as which sulfuric acid or ammonium sulfate is used in the initial stage of production and the solution after reduction repeatedly fed back from "(4) reduction step" is used during the production. Thereby, nickel is distributed in the aqueous phase to increase the nickel concentration in the aqueous phase and thus reduce the concentrations of other different components.

In the present invention, 2-ethylhexylphosphonic acid mono-2-ethylhexyl ester or di-(2,4,4-trimethylpentyl)phosphinic acid is used as the organic phase to selectively extract impurity elements, particularly cobalt, in the leachate to achieve a high effect of forming a nickel ammine sulfate complex solution with high purity.

### [(3) Complexing step]

In this step, ammonium sulfate is added to the high-purity nickel ammine sulfate complex solution obtained in the "(2) solvent extraction step" to completely convert the nickel in the complex solution into the form of an ammine complex.

At this time, ammonia is adjusted such that the molar ratio of the concentration of ammonium sulfate to the concentration of nickel in the solution becomes 2.0 or higher. If the concentration of ammonium in ammonium sulfate to be added is less than 2.0, nickel does not form an ammine complex, undesirably causing the precipitation of nickel hydroxide.

In addition, ammonium sulfate is already contained in the solution after reduction repeatedly fed back in the "(2) solvent extraction step". In this "(3) complexing step", ammonium sulfate is added only by an amount to make up for a shortage such that the molar ratio of the concentration of ammonium sulfate to the concentration of nickel in the solution is maintained 2.0 or higher.

Furthermore, in this step, the concentration of ammonium sulfate is preferably 100 to 500 g/L. A concentration of 500 g/L or higher is beyond the solubility in the solution, causing precipitation of crystals. A concentration of less than 100 g/L is difficult to achieve in consideration of the balance of metals in the process.

### [Step for producing nickel powder from nickel ammine sulfate complex solution]

A step for producing a nickel powder from a nickel ammine sulfate complex solution will be described below.

### <(a) Seed crystal addition step>

To the nickel ammine sulfate complex solution obtained in the complexing step, a nickel powder having an average particle size of 1 to 20 µm is added as seed crystals in the form of a slurry of nickel powder to prepare a mixture slurry containing the seed crystals.

The weight of the seed crystals added at this time is preferably 1 to 100% based on the weight of nickel in the nickel ammine sulfate complex solution. If the weight of the seed crystals is less than 1%, the reaction efficiency during the reduction in the next step will be significantly reduced. Further, if the weight of the seed crystals is 100% or more, the amount of the seed crystals used will be a large amount, which requires much cost for producing seed crystals and is not economical.

Further, a dispersant may be added at the same time. Since the seed crystals are dispersed by adding the dispersant, the efficiency of the subsequent reduction step can be increased.

The dispersant used here is not particularly limited as long as it has an acrylate or a sulfonate, but a lignosulfonate is preferred as a dispersant that can be industrially inexpensively obtained.

### [(4) Reduction step]

Hydrogen gas is blown into the mixture slurry obtained in "(a) seed crystal addition step" to generate a reduced slurry in which nickel in the solution is precipitated on the seed crystals. At this time, the reaction temperature is preferably 100 to 200°C. A reaction temperature of less than 100°C reduces the efficiency of the reduction. A reaction temperature of 200°C or higher has no influences over the reaction but increases loss of thermal energy or the like.

Further, the pressure during the reaction is preferably 1.0 to 4.0 MPa. If the pressure is less than 1.0 MPa, reaction efficiency will be reduced, and even if the pressure exceeds 4.0 MPa, there will be no influence on the reaction, and the loss of hydrogen gas will increase.

In the liquid of the mixture slurry obtained in "(a) seed crystal addition step", magnesium ions, sodium ions, sulfate ions, and ammonium ions are mainly present as impurities, but since all the ions remain in the solution, high purity nickel powder can be produced.

### [(5) Solid-liquid separation step]

Next, the reduced slurry obtained in "(4) reduction step" is subjected to solid-liquid separation to recover a high purity nickel powder as a solid phase component and a solution after reduction as a liquid phase component.

### [(b) Nickel exchange step]

The solution after reduction obtained in "(5) solid-liquid separation step" is repeatedly fed back to "(2) solvent extraction step", obtaining a nickel ammine sulfate complex solution having an increased concentration of nickel.

### <(c) Growth step>

The nickel ammine sulfate complex solution having the increased concentration of nickel obtained in "(b) nickel exchange step" is added to the high purity nickel powder recovered in "(5) solid-liquid separation step", and hydrogen gas is fed by the same method as in "(4) reduction step". Thereby, nickel is reduced and precipitated on the high purity nickel powder so as to be able to grow particles.

In addition, the repetition of the growth step, that is, use of the resulting high purity nickel powder instead of the high purity nickel powder from "(5) solid-liquid separation step" can produce high purity nickel powder having higher bulk density and a larger particle size.

Further, the resulting nickel powder may be finished into the shape of briquettes that are coarser, not easily oxidized, and easily handled through a nickel powder briquetting step and a briquette firing step as described below.

### [Nickel powder briquetting step]

The high purity nickel powder produced by the present invention is dried and then processed for shaping with a briquetting machine or the like to obtain nickel briquettes in a block form as a product form.

Further, in order to improve the processability to form the briquettes, a material that does not impair the product quality such as water is added as a binder to the nickel powder depending on the case.

### [Briquette sintering step]

The nickel briquettes prepared in the briquetting step is subjected to roasting and sintering in a hydrogen atmosphere to prepare a briquette sintered compact. This treatment is performed for increasing the strength and removing ammonia and a sulfur component remaining in a very small amount, and the roasting and sintering temperature of the treatment is preferably 500 to 1200°C. If the temperature is less than 500°C, the sintering will be insufficient, and even if the temperature exceeds 1200°C, the efficiency will hardly change but the loss of energy will increase.

### Examples

Hereinafter, the present invention will be described in more details with reference to Examples.

### Example 1

### [(a) Seed crystal addition step]

191 ml of 25% aqueous ammonia was added to a solution containing 330 g of ammonium sulfate and a nickel sulfate solution with 75 g of nickel, and the total amount of the solution was adjusted to 1000 ml to prepare a nickel ammine sulfate complex solution. 7.5 g of nickel powder having an average particle size of 2 µm was added to the resulting solution as seed crystals to prepare a mixture slurry.

### [(4) Reduction step]

The mixture slurry prepared in "(a) seed crystal addition step" was heated to 185°C with stirring in an autoclave, and hydrogen gas was blown and fed into the mixture slurry so that the inner pressure of the autoclave became 3.5 MPa, to perform a nickel powder generating treatment as a reduction treatment.

After one hour had passed from the feed of hydrogen gas, the feed of hydrogen gas was stopped, and the autoclave was cooled.

### [(5) Solid-liquid separation step]

The reduced slurry obtained after the cooling was subjected to a solid-liquid separation by filtration to recover a high purity nickel powder having a small size and a solution after reduction. At this time, 70 g of nickel powder was recovered. The concentration of nickel in the solution after reduction was 5 g/L.

### [(b) Nickel exchange step]

An organic solvent containing 10 g/L nickel was mixed with the solution after reduction recovered in "(5) solid-liquid separation step" so that a ratio of an organic phase to an aqueous phase became 10/L. Subsequently, the mixed solution was settled, and the concentration of nickel in the aqueous phase in the mixed solution settled was 100 g/L.

### [(c) Growth step]

Then, the total amount of the high purity nickel powder having the small size obtained in "(5) solid-liquid separation step" was added to the nickel ammine sulfate complex solution having the increased concentration of nickel obtained in "(b) nickel exchange step" to prepare a slurry.

The slurry was heated to 185°C with stirring in an autoclave. Hydrogen gas was blown and fed into the mixture slurry so that the inner pressure of the autoclave became 3.5 MPa.

After the lapse of one hour from the start of feeding hydrogen gas, the feed of hydrogen gas was stopped, and the autoclave was cooled. A slurry obtained after cooling was subjected to solid-liquid separation by filtration to recover high purity nickel powder having grown particles.

### Example 2

75 g of nickel powder having an average particle size of 1 µm as seed crystals was added to 1000 ml of the same nickel ammine sulfate complex solution as in Example 1. The slurry was heated to 185°C with stirring in an autoclave, and hydrogen gas was blown and fed into the mixture slurry so that the inner pressure of the autoclave became 3.5 MPa.

After the lapse of one hour from the start of feeding hydrogen gas, the feed of hydrogen gas was stopped, and the autoclave was cooled. A slurry obtained after cooling was subjected to solid-liquid separation by filtration. The recovered nickel powder was washed with pure water, and the grade of impurities in the nickel powder was analyzed. The mixing of Mg and Na into the nickel powder was not observed, and high purity Ni powder was able to be produced.

### Example 3

191 ml of 25% aqueous ammonia was added to a solution containing 22.5 g of the seed crystals used in Example 1, 1.5 g of lignin sodium sulfonate, 336 g of nickel sulfate, and 330 g of ammonium sulfate concentration, and the total amount of the solution was adjusted to 1000 ml to prepare a mixture slurry.

Then, the mixture slurry was heated to 185°C with stirring in an autoclave, and hydrogen gas was blown and fed into the mixture slurry so that the inner pressure of the autoclave became 3.5 MPa. After one hour had passed from the feed of hydrogen gas, the feed of hydrogen gas was stopped, and the autoclave was cooled. After the lapse of one hour from the start of feeding hydrogen gas, the feed of hydrogen gas was stopped, and the autoclave was cooled. A slurry obtained after cooling was subjected to solid-liquid separation treatment by filtration to recover nickel powder.

At this time, the concentration of nickel in the solution after reaction was 0.4 g/L, and the rate of reduction of 99% or higher could be obtained.

### Example 4

191 ml of 25% aqueous ammonia was added to a solution containing 336 g of nickel sulfate and 330 g of ammonium sulfate concentration, and the total amount of the solution was adjusted to 1000 ml. 75 g of nickel powder having an adjusted particle size of 1 µm was added to the solution to prepare a mixture slurry.

The mixture slurry was heated to 185°C with stirring in an autoclave, and hydrogen gas was blown and fed into the mixture slurry so that the inner pressure of the autoclave became 3.5 MPa to subject the slurry to nickel powder growing treatment which is reduction treatment.

After the lapse of one hour from the start of feeding hydrogen gas, the feed of hydrogen gas was stopped, and the autoclave was cooled. A reduced slurry obtained after cooling was subjected to solid-liquid separation by filtration to recover nickel powder having a small size.

191 ml of 25% aqueous ammonia was added to a solution containing the recovered nickel powder having the small size, 336 g of nickel sulfate, and 330 g of ammonium sulfate concentration, and the total amount of the solution was adjusted to 1000 ml. Again, the slurry was heated to 185°C with stirring in the autoclave. Hydrogen gas was blown and fed into the mixture slurry so that the inner pressure of the autoclave became 3.5 MPa, to perform a particle growing treatment, followed by a solid-liquid separation by filtration. Thereby, a nickel powder having grown particles was recovered.

This operation was repeated 10 times to further grow the nickel powder.

The nickel powder obtained by this operation had a sulfur content of 0.04%.

The obtained nickel powder was heated to 1000°C in a 2% hydrogen atmosphere and held for 60 minutes. Nickel powder obtained after the holding had a sulfur content of 0.008%, and the sulfur content could be further reduced by roasting.

### (Comparative Example 1)

A mixed solution of 45 ml of pure water, 20 g of nickel sulfate hexahydrate, 15 g of ammonium sulfate, and 10 ml of 28% aqueous ammonia without seed crystals was placed into an autoclave. While stirring the solution, hydrogen gas was fed to 3.5 MPa. The temperature was heated to 185°C, and was maintained for 6 hours. After the cooling, the inside of the autoclave was examined. A precipitate as a scale adhered to the container and the stirring blade, and no powdery nickel was produced.

### (Comparative Example 2)

The reduction step was performed under the same conditions as in Example 3 except that that lignin sodium sulfonate was not added. As a result, 33 g of nickel powder could be recovered, and the recovery rate was only 14%.

## Claims

1. A method of producing nickel powder, comprising performing processes (1) to (5) on a sulfuric acid solution containing nickel and cobalt:
(1) a pH adjusting step of adding an alkali hydroxide to the sulfuric acid solution containing nickel and cobalt to obtain a pH-adjusted solution;
(2) a solvent extraction step of bringing the pH-adjusted solution obtained in the pH adjusting step into contact with an extractant to separate into a raffinate and an organic phase after extraction, and then bringing the organic phase after extraction into contact with a solution after reduction obtained in a subsequent solid-liquid separation step to separate into an aqueous phase after exchange containing nickel and an organic phase after exchange;
(3) a complexing step of adding ammonium sulfate or a solution after reduction obtained in a solid-liquid separation step described below and ammonium sulfate to the aqueous phase after exchange obtained in the solvent extraction step to obtain a nickel ammine sulfate complex solution;
(4) a reduction step of blowing hydrogen gas into a mixture slurry prepared by adding seed crystals to the nickel ammine sulfate complex solution obtained in the complexing step, to form a nickel powder by precipitation of nickel on a surface of the seed crystals to obtain a reduced slurry containing the nickel powder; and
(5) the solid-liquid separation step of subjecting the reduced slurry obtained in the reduction step to solid-liquid separation to obtain a nickel powder and the solution after reduction, and recycling the resulting solution after reduction in either or both of the solvent extraction step and the complexing step.

2. The method of producing nickel powder according to claim 1, wherein in the solvent extraction step, the resulting organic phase after exchange is brought into contact with water to separate into a cobalt-recovering solution and an organic phase after stripping, and then the organic phase after stripping is recycled as the extractant.

3. The method of producing nickel powder according to claim 1, wherein in the solid-liquid separation step, repeated operation of sieving the resulting nickel powder by particle size, and adding a nickel powder having a particle size smaller than a predetermined particle size as seed crystals to either or both of the complexing step and the reduction step provides a coarse nickel powder.

4. The method of producing nickel powder according to claim 3, wherein the nickel powder being sieved to have the particle size smaller than the predetermined particle size has an average particle size of 0.1 to 100 µm.

5. The method of producing nickel powder according to claim 1, wherein, in the reduction step, a dispersant containing one or more selected from polyacrylic acid, acrylate salts, and sulfonate salts is further added during the preparation of the mixture slurry.

6. The method of producing nickel powder according to claim 1, wherein, in the reduction step, an amount of the seed crystals added is 1 to 100% based on the weight of nickel in the nickel ammine sulfate complex solution.

7. The method of producing nickel powder according to claim 1, wherein the sulfuric acid solution containing nickel and cobalt is at least one of nickel and cobalt mixed sulfide, crude nickel sulfate, nickel oxide, nickel hydroxide, nickel carbonate, and metal nickel powder.

8. The method of producing nickel powder according to claim 1, wherein the extractant is 2-ethylhexylphosphonic acid mono-2-ethylhexyl ester or di-(2,4,4-trimethylpentyl)phosphinic acid.

9. The method of producing nickel powder according to claim 1, wherein a concentration of the ammonium sulfate in the nickel ammine sulfate complex solution is in a range of 100 to 500 g/L, and a molar ratio of the ammonium concentration to the concentration of nickel in the complex solution is 1.9 or higher.

10. The method of producing nickel powder according to claim 1, wherein the reduction step is performed while maintaining a temperature in a range of 150 to 200°C and a pressure in a range of 1.0 to 4.0 MPa.

11. The method of producing nickel powder according to claim 1, comprising:
a nickel powder briquetting step of processing the nickel powder obtained through the reduction step and the solid-liquid separation step into nickel briquettes in a block form using a briquetting machine; and
a briquette sintering step of subjecting the resulting nickel briquettes in the block form to sintering treatment under holding conditions at a temperature of 500 to 1200°C in a hydrogen atmosphere to form nickel briquettes as a sintered compact.

12. The method of producing nickel powder according to claim 1, comprising an ammonium sulfate recovery step of concentrating the solution after reduction obtained in the solid-liquid separation step to crystallize ammonium sulfate and recovering ammonium sulfate crystals.

13. The method of producing nickel powder according to claim 1, comprising an ammonia recovery step of adding an alkali to the solution after reduction obtained in the solid-liquid separation step, heating the resulting mixture to volatilize ammonia gas and recovering the ammonia gas.
